# EUROPEAN PATENT APPLICATION

(11) **EP 4 293 151 A1**
(43) Date of publication of application: **20.12.2023**
(21) Application number: 21925725.0
(22) Date of filing: 12.04.2021
(51) Int. Cl.: D06F 25/00, D06F 33/69, D06F 58/22, D06F 58/45, D06F 103/68, D06F 105/46

(54) **WASHING AND DRYING MACHINE**

(30) Priority: 12.02.2021 JP 2021020817
(71) Applicant: Hitachi Global Life Solutions, Inc., Minato-ku, Tokyo 105-8410 (JP)
(72) Inventor: TAKAHASHI, Koutarou, Tokyo 105-8410 (JP); UENO, Shinji, Tokyo 105-8410 (JP); JOKO, Yasuyuki, Tokyo 100-8280 (JP); YOSHIKAWA, Masashi, Tokyo 100-8280 (JP)
(74) Representative: MERH-IP Matias Erny Reichl Hoffmann Patentanwälte PartG mbB
(86) International application number: PCT/JP2021/015164
(87) International publication number: WO 2022/172476

(57) **Abstract**

There is provided a washing and drying machine capable of preventing the accumulation of a lint clump generated in an air duct provided from a back side of a filter to an air blower. The washing and drying machine includes an inner tank that accommodates laundry and rotates during each of a washing step, a rinsing step, and a water removal step, an outer tank that surrounds the inner tank and stores water, a drainage channel that drains the water in the outer tank, an air blower that supplies air to the inner tank and the outer tank, an air duct that connects the outer tank with the air blower, an air duct filter that is provided between the outer tank and the air duct and collects lint traveling toward a suction port of the air duct, and a lint drainage channel that connects the air duct with the drainage channel.

## Description

### Technical Field

The present invention relates to a washing and drying machine that cleans an air duct filter disposed on the upstream side of an air blower.

### Background Art

There has been known a conventional washing and drying machine that removes, by using water flow, a foreign substance that adheres to an air duct filter on the upstream side of an air blower. For example, Claim 1 of Patent Literature 1 describes "A drying and washing machine that includes a water tank, a rotational drum that is rotatably disposed in the water tank, a dehumidification section that dehumidifies air led from the interior of the rotational drum, a heating section that heats the air dehumidified by the dehumidification section, an air blowing section that leads the air in the interior of the rotational drum to the dehumidification section and blows the air heated by the heating section into the interior of the rotational drum, and filter means that is provided in a path on a suction port side between the rotational drum and the air blowing section and on the upstream side of air flow generated by the air blowing section during a drying step and is disposed so as to be immersed in washing water supplied into the water tank during a washing step or a rinsing step, the drying and washing machine comprising: cleaning means that removes a foreign substance that adheres to the filter means by generating water flow in the washing water on the basis of the rotational driving of the rotational drum; and rotational drum rotation control means that changes the rotational speed of the rotational drum in the washing step or the rinsing step".

Also, in Patent Literature 1, as illustrated in Figure 5 of the literature, a filter is disposed in the lower portion of the back face of the water tank immersed in the washing water during the washing step or during the rinsing step, so that a foreign substance such as cotton dust and thread waste (hereinafter, referred to as a "lint") that is contained in circulation air during the drying step and is larger than the coarseness of the mesh of the filter (in paragraph 0060 of the literature, 1 mm to 3 mm) is collected, so that the foreign substance is prevented from intruding into the air blower and the heater in the downstream of the filter.

In this way, in the washing and drying machine of Patent Literature 1, the lint that adheres to the front side of the filter during the drying step is removed from the front side of the filter by the water flow when the rotational drum is rotated during the washing step or the rinsing step thereafter, and is then drained from the drainage port opening to the lowermost portion of the water tank, so that the clogging on the front side of the filter can be eliminated to prevent the air amount of the circulation air during the drying step from being reduced.

### Citation List

### Patent Literature

PTL 1: Japanese Patent No. 3863167

### Summary of Invention

### Technical Problem

However, typically, most of the lint contained in the circulation air during the drying step is approximately several tens to several hundreds of µm smaller than the mesh of the filter, so that most of the lint in the circulation air passes through the filter, and intrudes into the air duct provided from the filter to the air blower. The fine lint that intrudes into the air duct absorbs cooling water supplied into the air duct for dehumidification during the drying step or water supplied to the water tank during the washing step or during the rinsing step, and combines with the lint therearound to become a lint clump which is then accumulated on the back side of the filter. The lint clump that is accumulated on the back side of the filter and is larger than the mesh does not flow reversely to the front side of the filter in the cleaning of Patent Literature 1, so that when the drying step is repeated, the lint adherence to the back side of the filter increases gradually, and the clogging on the back side of the filter progresses gradually.

In this way, in the washing and drying machine of Patent Literature 1, the clogging on the back side of the filter progresses with time, and consequently, the air amount of the circulation air during the drying step may be reduced to cause lack of drying in clothes and the like and to cause drainage failure in the air duct.

Accordingly, an object of the present invention is to provide a washing and drying machine capable of preventing the clogging of an air duct filter by draining a lint clump generated in an air duct provided from the back side of the air duct filter to an air blower.

### Solution to Problem

To solve the above problems, a washing and drying machine of this example includes an inner tank that accommodates laundry and rotates during each of a washing step, a rinsing step, and a water removal step, an outer tank that surrounds the inner tank and stores water, a drainage channel that drains the water in the outer tank, an air blower that supplies air to the inner tank and the outer tank, an air duct that connects the outer tank with the air blower, an air duct filter that is provided between the outer tank and the air duct and collects lint traveling toward a suction port of the air duct, and a lint drainage channel that connects the air duct with the drainage channel.

### Advantageous Effects of Invention

According to the washing and drying machine of the present invention, the clogging of the air duct filter is prevented by draining the lint clump generated in the air duct provided from the back side of the air duct filter to the air blower, so that it is possible to prevent lack of drying in clothes and the like and drainage failure in the air duct.

### Brief Description of Drawings

Figure 1 is a cross-sectional view of a washing and drying machine of a comparative example.
Figure 2 is a front view of an outer tank and a mesh filter of the comparative example.
Figure 3 is a cross-sectional view of a washing and drying machine of Example 1.
Figure 4 is a front view of the outer tank and the mesh filter of Example 1.
Figure 5 is a flowchart of a typical operation example of the washing and drying machine.
Figure 6A is a flowchart explaining an example of a mesh filter cleaning method of Example 1.
Figure 6B is a flowchart explaining another example of the mesh filter cleaning method of Example 1.
Figure 7 is a cross-sectional view of a washing and drying machine of Example 2.
Figure 8A is an example of a sub-mesh filter cleaning configuration of Example 2.
Figure 8B is another example of the sub-mesh filter cleaning configuration of Example 2.

### Description of Embodiments

Hereinbelow, examples of a washing and drying machine of the present invention will be described with reference to the drawings. Note that hereinafter, as a specific configuration of the washing and drying machine, a drum type washing and drying machine in which a rotational axis of an inner tank is substantially horizontal is exemplified, but even when the present invention is applied to a vertical type washing and drying machine in which a rotational axis of an inner tank is substantially vertical, the same effects can be obtained.

### <A washing and drying machine 1 of a comparative example>

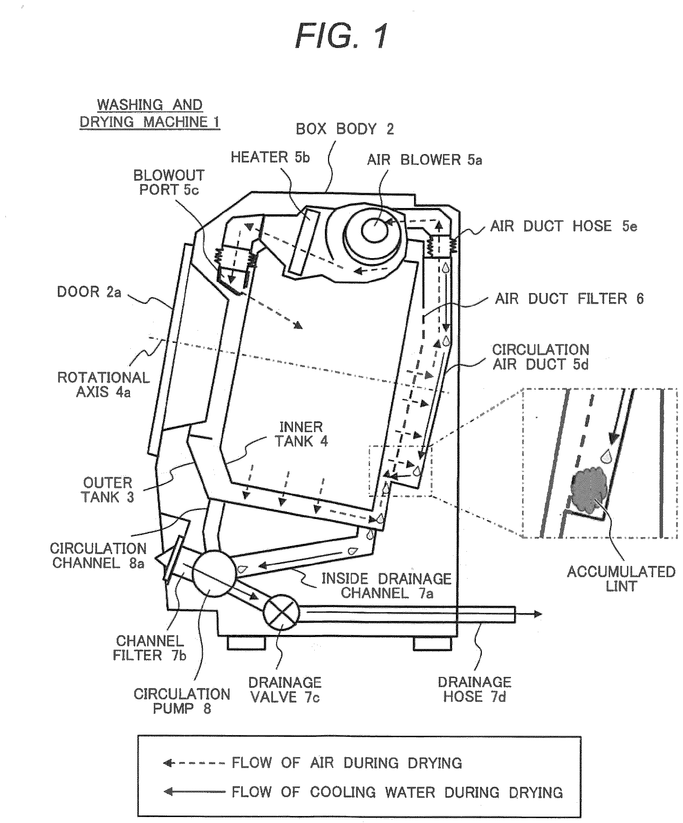

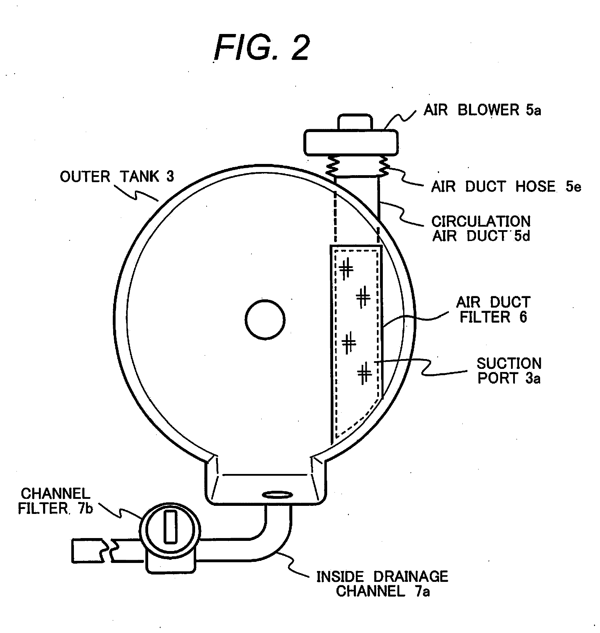

Before describing the washing and drying machine of the present invention, the washing and drying machine 1 of the comparative example will be first described with reference to Figures 1 and 2. Note that in the washing and drying machine of Patent Literature 1, the air blower and the heater are disposed below the drum rotational axis, but in the washing and drying machine 1 of the comparative. example, the air blower and the heater are disposed above the drum rotational axis.

As illustrated in the cross-sectional view of Figure 1, the washing and drying machine 1 of the comparative example includes a box body 2, a door 2a, an outer tank 3, an inner tank 4, an air blowing device 5 (an air blower 5a, a heater 5b, a blowout port 5c, a circulation air duct 5d, an air duct hose 5e), an air duct filter 6, a drainage channel 7 (an inside drainage channel 7a, a channel filter 7b, a drainage valve 7c, a drainage hose 7d), a circulation pump 8, and a circulation channel 8a.

The box body 2 is the outer casing of the washing and drying machine 1, and the door 2a that is openable and closeable is mounted to the opening of the front face of the box body 2. The outer tank 3 is disposed in the interior of the box body 2, and can store water in its interior. The inner tank 4 is disposed in the interior of the outer tank 3, and rotates around a rotational axis 4a at low speed or high speed in a state of accommodating laundry such as clothes during each of a washing step, a rinsing step, a water removal step, and a drying step.

The air blowing device 5 generates circulation air indicated by dashed line arrows in the drawing during the drying step, and dries the laundry. As illustrated, the air blowen out from the air blower 5a is heated by the heater 5b in the downstream, and then passes through the blowout port 5c to be supplied to the inner tank 4. The air supplied to the inner tank 4 heats the wet laundry accommodated in the inner tank 4 to take away moisture, and then passes through the outer peripheral hole of the inner tank 4 to flow out into the space of the gap between the inner tank 4 and the outer tank 3, thereby further passing through the air duct filter 6 that is a mesh filter, to reach the circulation air duct 5d. The air that flows into the circulation air duct 5d has humidity increased by taking away the moisture from the laundry, so that cooling water indicated by solid line arrows in the drawing is supplied from the upper portion of the circulation air duct 5d, the air at high humidity is cooled to cause water vapor condensation, and the air is dehumidified. Then, the dried air after the dehumidification passes through the air duct hose 5e to return to the air blower 5a. In this way, the air blowing device 5 supplies the high temperature drying air to the wet laundry in the inner tank 4, thereby promoting the drying of the laundry.

The drainage channel 7 is a path for draining the water from the outer tank 3, and includes the inside drainage channel 7a that communicates with the opening of the bottom face of the outer tank 3, the channel filter 7b that collects the lint in the drainage water flowing through the inside drainage channel 7a, the drainage valve 7c that is closed mainly during the washing step and during the rinsing step and is opened during other steps, and the drainage hose 7d through which the drainage water passes when the drainage valve 7c is opened. Note that the lint collected by the channel filter 7b is cleaned by a user, as needed.

The circulation pump 8 is provided on the downstream side of the channel filter 7b, and circulates the drainage water in the outer tank 3 through the circulation channel 8a during the washing step and during the rinsing step.

Figure 2 is a front view of the outer tank 3 and the air duct filter 6 when the inner tank 4 is not illustrated. In the washing and drying machine 1 of the comparative example, since the air blower 5a is disposed above the outer tank 3, the circulation air duct 5d provided from the outer tank 3 to the air blower 5a is disposed below the air blower 5a and on the back side of the outer tank 3 so as to connect both of the outer tank 3 and the air blower 5a in the shortest distance. Also, in the washing and drying machine 1 of the comparative example, to reduce the ventilation resistance from the outer tank 3 to the air blower 5a and increase the air amount of the circulation air, a suction port 3a that is vertically long and large is provided in the back face of the outer tank 3, and the suction port 3a is covered by the air duct filter 6 having a large area.

### <The lint accumulation in the circulation air duct>

In the washing and drying machine 1 of the comparative example having the above configuration, a mechanical force by the laundry in the inner tank 4 rubbing against each other during the washing step and during the rinsing step and a mechanical force and the like by the air supplied to the inner tank 4 during the drying step separate the fiber of the laundry to generate the lint. The generated lint, which is heavy in wet state in the early stage of the drying step, does not drift, but becomes light and starts drifting as the drying progresses. Of the lint that drifts, the lint larger than the mesh of the air duct filter 6 is collected by the air duct filter 6, and is drained to the inside drainage channel 7a after the completion of the washing step and the rinsing step thereafter.

On the other hand, of the lint that drifts during the drying step, the lint smaller than the mesh of the air duct filter 6 passes through the air duct filter 6 to intrude into the circulation air duct 5d. Thus, when the using period of the washing and drying machine 1 becomes long, a lint clump as illustrated in the enlarged view of Figure 1 is accumulated on the back side of the air duct filter 6 for the same reason as explained in the "Technical Problem" section.

### <Example 1>

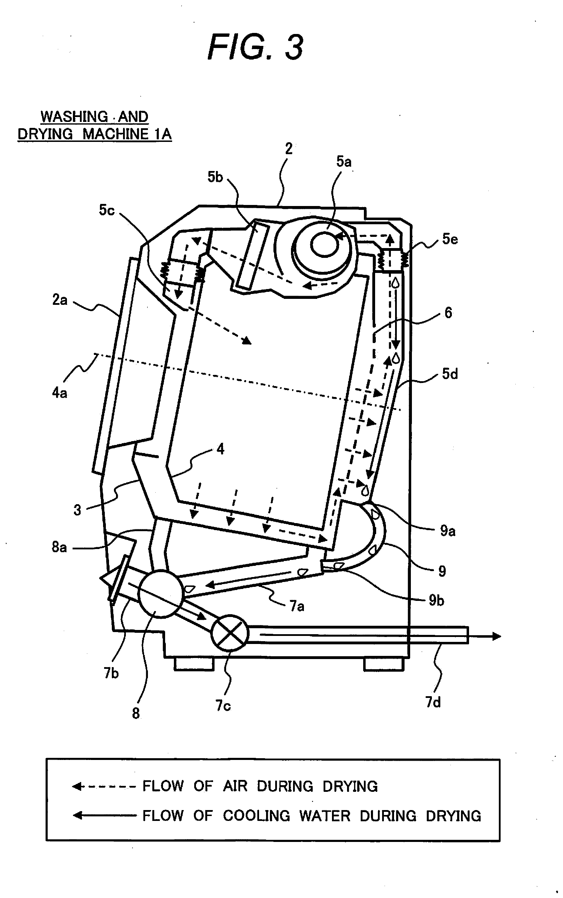

Next, a washing and drying machine 1A according to Example 1 of the present invention will be described with reference to Figures 3 to 6B. Note that the overlapped description of the common points with the washing and drying machine 1 of the comparative example is omitted.

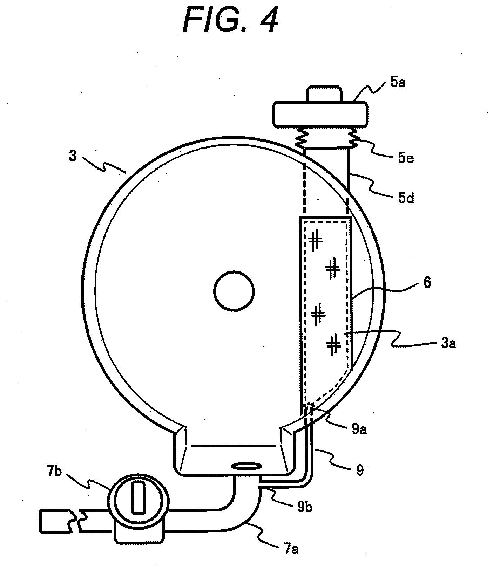

As illustrated in the cross-sectional view of Figure 3 and the front view of Figure 4, in the washing and drying machine 1A of this example, a lint drainage channel 9 that connects the lower portion of the circulation air duct 5d with the inside drainage channel 7a is added to the configuration of the washing and drying machine 1 of the comparative example.

In the washing and drying machine 1A of this example having the above configuration, when the mesh coarseness of the mesh of the air duct filter 6 is, for example, several hundreds of µm, the lint having a size of approximately several tens of µm passes through the air duct filter 6 to intrude into the circulation air duct 5d during the drying step. In the interior of the circulation air duct 5d, the lint clump is generated by the same action as explained in the comparative example, but since the lint clump in the early stage of the generation is sufficiently small, the lint clump passes through the lint drainage channel 9 to be drained into the inside drainage channel 7a with the cooling water during the drying step and with the drainage water from the outer tank 3 during the drainage after the completion of the washing step and the rinsing step. At this time, a lint drainage channel air duct side connection section 9a is desirably at a position lower than the highest height that the water flow stirred by the high speed rotation of the inner tank 4 reaches, from <The cleaning method of the air duct filter 6> described later. With this, in addition to the lint draining action only by the cooling water, the draining action by the water used for cleaning acts, so that more reliable lint drainage is enabled.

Note that the diameter of the lint drainage channel 9 may be approximately several mm, but the lint drainage channel 9 is desirably designed to a diameter of approximately 6 to 10 mm so that even the lint clump that grows to some degree can be drained. Also, a lint drainage channel drainage channel side connection section 9b provided at the lower end of the lint drainage channel 9 is desirably connected to the upstream side of the channel filter 7b so that the lint drained through the lint drainage channel 9 can be collected by the channel filter 7b, but the lint drainage channel drainage channel side connection section 9b may be connected to the downstream side of the channel filter 7b to directly flow the lint clump to a sewer and the like.

### <The operation of the washing and drying machine>

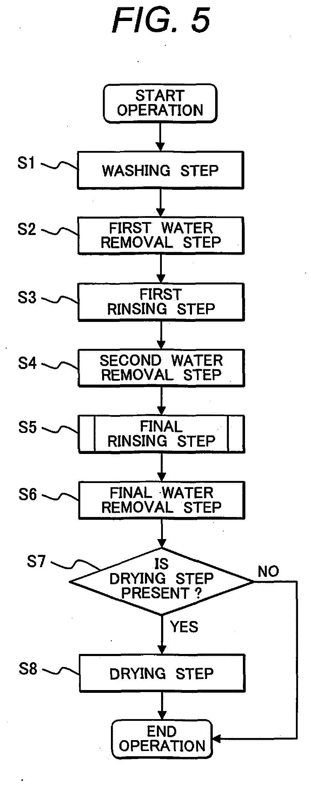

Next, a typical operation example of the washing and drying machine will be described with reference to the flowchart of Figure 5.

When the user throws laundry and a detergent into the inner tank 4 to set the type and amount of the laundry, the presence or absence of the drying step, and the like, and then presses the start button, the operation of the washing and drying machine 1A is started by the control of a controller that controls water injection, drainage, the rotation of the inner tank 4, the driving of the air blower 5a, the heating of the heater 5b, and the supply of cooling water, and the like.

First, in step S1, the controller executes a washing step by storing water in a predetermined amount in the outer tank 3 in a state of closing the drainage valve 7c and then rotating the inner tank 4 at low speed.

Next, in step S2, the controller executes a first water removal step by rotating the inner tank 4 at high speed in a state of opening the drainage valve 7c.

In step S3, the controller executes a first rinsing step by storing water in a predetermined amount in the outer tank 3 in a state of closing the drainage valve 7c and then rotating the inner tank 4 at low speed.

In step S4, the controller executes a second water removal step by rotating the inner tank 4 at high sped in a state of opening the drainage valve 7c.

In step S5, the controller executes a final rinsing step by storing water in a predetermined amount in the outer tank 3 in a state of closing the drainage valve 7c and then rotating the inner tank 4 at low speed.

In step S6, the controller executes a final water removal step by rotating the inner tank 4 at high speed in a state of opening the drainage valve 7c.

In step S7, the controller determines whether the execution of the drying step has been set. Then, when the drying step has been set, the process goes to step S8, and when the drying step has not been set, the operation is ended.

In step S8, the controller drives the air blowing device 5 in a state of opening the drainage valve 7c, and dries the laundry in the inner tank 4. Then, when the drying of the laundry ends, the operation is ended.

### <The cleaning method of the air duct filter 6>

Next, the cleaning method of the air duct filter 6 in the washing and drying machine 1A of this example will be described. Note that the cleaning of the air duct filter 6 may be executed by any one of steps S1 to S6, but from the viewpoint of preventing the lint adherence to the laundry, the cleaning of the air duct filter 6 is desirably performed between the final rinsing and the final water removal, so that in this example, the cleaning of the air duct filter 6 is executed in step S5 that is the final rinsing step.

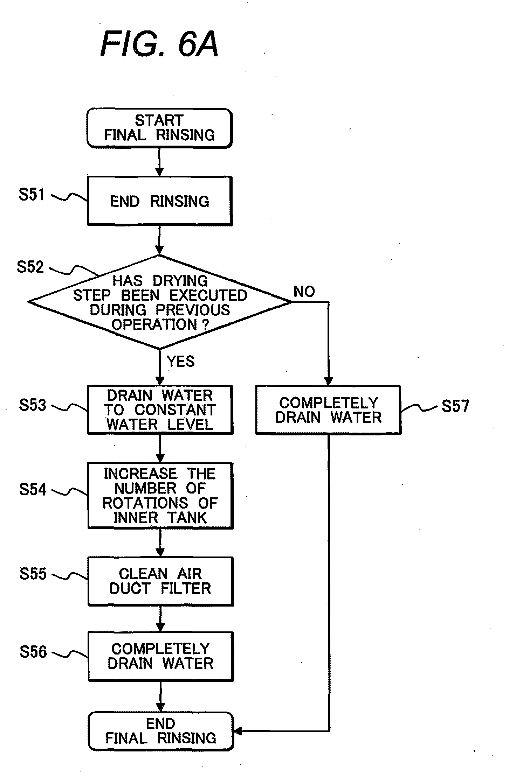

Figure 6A is an example of step S5 that is the final rinsing step. In Figure 6A, after the rinsing ends (step S51), the controller determines whether the drying step has been executed during a previous operation (that is, whether the fine lint has been sucked into the circulation air duct 5d) (step S52), and when the drying step has been executed, the controller starts the cleaning step of the air duct filter 6. On the other hand, when the drying step has not been executed, the controller ends the final rinsing step of step S5 without cleaning the air duct filter 6, and executes the next final water removal step (step S6).

In the cleaning step of the air duct filter 6 in Figure 6A, the controller first opens the drainage valve 7c, drains the remaining water used in the rinsing to the constant water level (step S53), closes the drainage valve 7c, and rotates the inner tank 4 at the number of rotations higher than the number of rotations during the rinsing step (step S54). At this time, since the water in the outer tank 3 is rolled up to the upper end of the air duct filter 6 by the inner tank 4 that rotates at high speed, the lint on the entire faces on both sides of the air duct filter 6 can be washed away by the stirred water flow (step S55). Thereafter, the controller opens the drainage valve 7c in a state of maintaining the high speed rotation of the inner tank 4, and completely drains the remaining water in the outer tank 3 while continuing the cleaning of the air duct filter 6 (step S56). At this time, the lint on the front side of the air duct filter 6 is directly drained to the inside drainage channel 7a., and the lint on the bask side of the air duct filter 6 is drained to the inside drainage channel 7a through the lint drainage channel 9.

Note that the upper end of the air duct filter 6 is designed so as to be lower than the highest height that the water flow stirred by the high speed rotation of the inner tank 4 reaches in step S55. This is because if the upper end of the air duct filter 6 is higher than the height of the rolled-up water flow, the periphery of the upper end of the air duct filter 6 cannot be cleaned and the clogging in the periphery of the upper end cannot be eliminated.

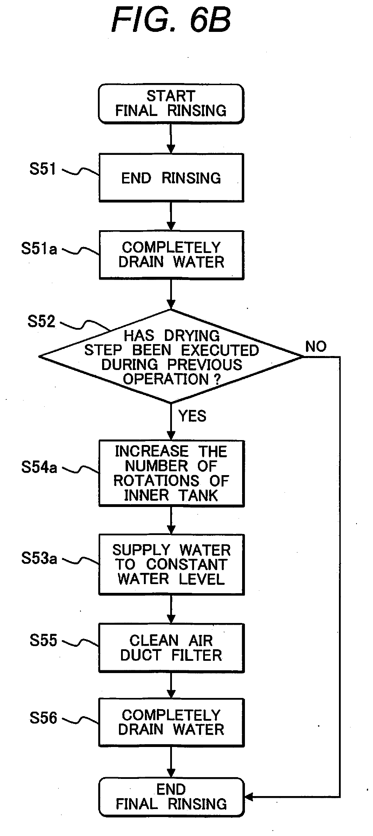

Also, Figure 6B is another example of step S5 that is the final rinsing step. In Figure 6B, after the rinsing ends (step S51), the controller opens the drainage valve 7c, and completely drains the remaining water in the outer tank 3 (step S51a). Thereafter, the controller determines whether the drying step has been executed during a previous operation (that is, whether the fine lint has been sucked into the circulation air duct 5d) (step S52), and when the drying step has been executed, the controller starts the cleaning step of the air duct filter 6. On the other hand, when the drying step has not been executed, the controller ends the final rinsing step of step S5 without cleaning the air duct filter 6, and executes the next final water removal step (step S6). .

In the cleaning step of the air duct filter 6 in Figure 6B, the controller first rotates the inner tank 4 at the number of rotations higher than the number of rotations during the rinsing step (step S54a), then closes the drainage valve 7c, and supplies water into the outer tank 3 to the constant water level (step S53a). At this time, since the water in the outer tank 3 is rolled up to the upper end of the air duct filter 6 by the inner tank 4 that rotates at high speed, the lint on the entire faces on both sides of the air duct filter 6 can be washed away by the stirred water flow (step S55). Thereafter, the controller opens the drainage valve 7c in a state of maintaining the high speed rotation of the inner tank 4, and completely drains the remaining water in the outer tank 3 while continuing the cleaning of the air duct filter 6 (step S56). At this time, the lint on the front side of the air duct filter 6 is directly drained to the inside drainage channel 7a, and the lint on the bask side of the air duct filter 6 is drained to the inside drainage channel 7a through the lint drainage channel 9.

Note that in this example, cleaning the air duct filter 6 in step S55 by the final rinsing of the rinsing step has been described, but the cleaning step of step S55 may be provided between the rinsing step and the water removal step or at the start of the water removal step.

In this way, by the cleaning method of one of Figures 6A and 6B, the lint can be drained to the outside of the outer tank 3 in a state where the lint torn off from the air duct filter 6 is prevented from adhering to the clothes in the inner tank.

Note that the cleaning step of the air duct filter 6 may be executed as part of the intra-tank cleaning step of cleaning the inner wall of the outer tank 3 arbitrarily set by the user without determining whether or not the drying step has been executed during the previous operation.

### <The effects of this example>

As described above, according to the washing and drying machine of this example, the clogging of the air duct filter is prevented by draining the lint clump generated in the air duct provided from the back side of the air duct filter to the air blower, so that it is possible to prevent lack of drying in laundry and drainage failure in the air duct.

### <Example 2>

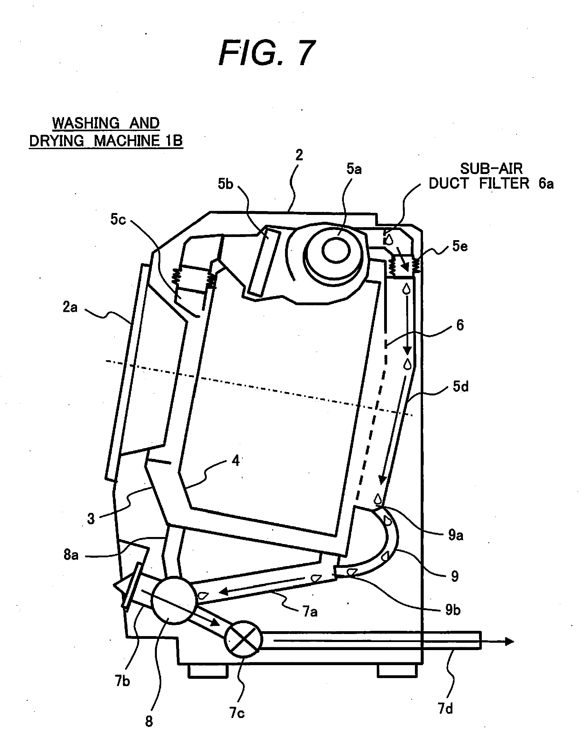

Next, a washing and drying machine 1B according to Example 2 of the present invention will be described with reference to Figures 7 to 8B. Note that the overlapped description of the common points with Example 1 is omitted.

As illustrated in the cross-sectional view of Figure 7, in the washing and drying machine 1B of this example, a sub-air duct filter 6a in front of the suction port of the air blower 5a is added to the configuration of the washing and drying machine 1A of Example 1.

In the washing and drying machine 1A of Example 1, the lint clumps of the front and back of the air duct filter 6 can be cleaned and removed, but the fine lint that passes through the air duct filter 6 may drift in the circulation air to be sucked into the air blower 5a or further, to be accumulated on the heater 5b. The air blower 5a and the heater 5b are designed so that their performance is not lowered by the fine lint, but, for example, when the lint clumps in a large amount that grow at positions where the ventilation resistance is large, like the bellows portion of the air duct hose 5e, are sucked into the air blower 5a or are accumulated on the heater 5b, their performance may be deteriorated with time.

Accordingly, in the washing and drying machine 1B of this example, the lint clump that moves by drifting in the circulation air after the lint clump grows, for example, in the vicinity of the air duct hose 5e is collected by the sub-air duct filter 6a disposed just before the air blower 5a, so that the lint clump can be prevented from being sucked into the air blower 5a or accumulated on the heater 5b.

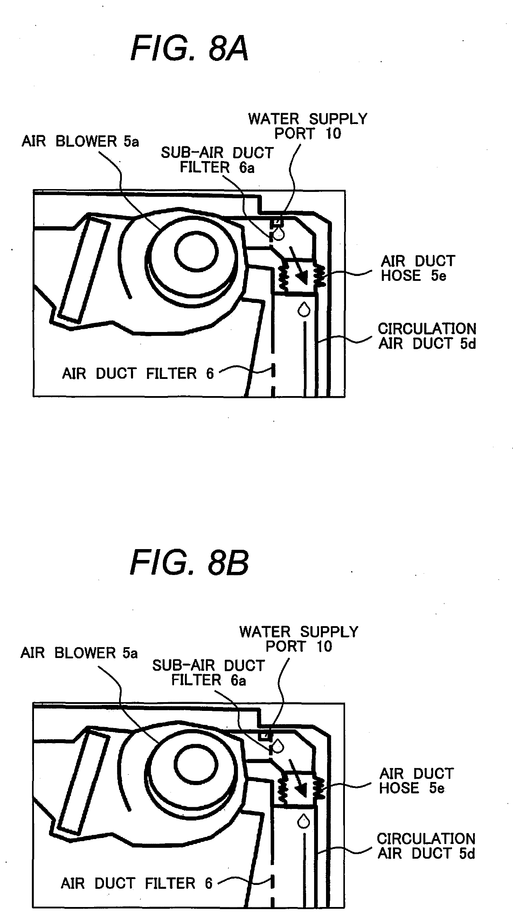

In that case, in the filter cleaning method of Example 1, the sub-air duct filter 6a provided above the air duct hose 5e cannot be cleaned, so that in this example, the configurations as in Figures 8A and 8B are provided to clean the sub-air duct filter 6a.

Figure 8A is an example of a configuration for cleaning the sub-air duct filter 6a, and a water supply port 10 that supplies cooling water to the front face (upstream side) of the sub-air duct filter 6a is provided. In this case, the cooling water supplied from the water supply port 10 washes away the front face of the sub-air duct filter 6a, and then falls into the circulation air duct 5d, so that even when the coarseness of the mesh of the sub-air duct filter 6a is small, the lint clump can be removed from the front face of the sub-air duct filter 6a.

On the other hand, Figure 8B is another example of a configuration for cleaning the sub-air duct filter 6a, and the water supply port 10 that supplies cooling water to the back face (downstream side) of the sub-air duct filter 6a is provided. In this case, the cooling water supplied from the water supply port 10 flows out from the back face of the sub-air duct filter 6a to the front face of the sub-air duct filter 6a, and then falls into the circulation air duct 5d, so that the clogging of the sub-air duct filter 6a can be efficiently removed.

### Reference Signs List

- 1, 1A, 1B: washing and drying machine,
- 2: box body,
- 2a: door,
- 3: outer tank,
- 3a: suction port,
- 4: inner tank,
- 5: air blowing device,,
- 5a: air blower,,
- 5b: heater,,
- 5c: blowout port,
- 5d: circulation air duct,
- 5e: air duct hose,
- 6: air duct filter,
- 6a: sub-air duct filter,
- 7: drainage channel,
- 7a: inside drainage channel,
- 7b: channel filter,
- 7c: drainage valve,
- 7d: drainage hose,
- 8: circulation pump,
- 8a: circulation channel,
- 9: lint drainage channel,
- 9a: lint drainage channel air duct side connection section,
- 9b: lint drainage channel drainage channel side connection section,
- 10: water supply port

## Claims

1. A washing and drying machine comprising:
an inner tank that accommodates laundry and rotates during each of a washing step, a rinsing step, and a water removal step;
an outer tank that surrounds the inner tank and stores water;
a drainage channel that drains the water in the outer tank;
an air blower that supplies air to the inner tank and the outer tank;
an air duct that connects the outer tank with the air blower;
an air duct filter that is provided between the outer tank and the air duct and collects lint traveling toward a suction port of the air duct; and
a lint drainage channel that connects the air duct with the drainage channel.

2. The washing and drying machine according to claim 1, wherein the air duct filter is provided in a portion on which water flow stirred during the rotation of the inner tank abuts.

3. The washing and drying machine according to claim 2, wherein an upper end of the air duct filter is lower than the highest height that the water flow stirred by the inner tank reaches.

4. The washing and drying machine according to claim 1, wherein the air in the outer tank is circulated in the order of the air duct filter, the air duct, the air blower, and the inner tank.

5. The washing and drying machine according to claim 1,
wherein the washing and drying machine includes a controller that executes the washing step, the rinsing step, the water removal step, and a drying step by controlling the rotation of the inner tank, the water injection and the drainage of the outer tank, and the driving of the air blower, and
wherein the controller executes a cleaning step of removing the lint that adheres to the air duct filter.

6. The washing and drying machine according to claim 5, wherein the cleaning step rotates the inner tank at the number of rotations higher than the number of rotations during the washing step or during the rinsing step in a state where water in a predetermined amount is stored in the outer tank, and cleans the lint that adhere to the front and back of the air duct filter by the water flow stirred by the inner tank.

7. The washing and drying machine according to claim 5, wherein the cleaning step is executed between the rinsing step and the water removal step.

8. The washing and drying machine according to claim 5, wherein whether or not the cleaning step is required to be executed is determined according to whether the drying step has been executed in a previous operation.

9. The washing and drying machine according to any one of claims 1 to 8, wherein a sub-air duct filter is provided on a downstream side of the air duct filter and on an upstream side of the air blower.

10. The washing and drying machine according to claim 9, wherein a water supply port that supplies water for sub-air duct cleaning to a front face of the sub-air duct filter is provided.

11. The washing and drying machine according to claim 9, wherein the water supply port that supplies water for sub-air duct cleaning to a back face of the sub-air duct filter is provided.

12. The washing and drying machine according to any one of claims 1 to 11, wherein a rotational axis of the inner tank is substantially horizontal.

13. The washing and drying machine according to any one of claims 1 to 11, wherein the rotational axis of the inner tank is substantially vertical.
